# EUROPEAN PATENT APPLICATION

(11) **EP 2 701 280 A1**
(43) Date of publication of application: **26.02.2014**
(21) Application number: 12006055.3
(22) Date of filing: 24.08.2012
(51) Int. Cl.: H02J 11/00

(54) **Auxiliary power supply for high voltage applications**

(71) Applicant: ABB Technology AG, 8050 Zürich (CH)
(72) Inventor: Stengel, Gregor, 76227 Karlsruhe (DE); Breder, Henrik, 72347 Västeras (SE); Skarby, Per, 5436 Würenlos (CH); Vittor, Timothy, Easton, Pennsylvania 18045 (DE)
(74) Representative: Kock, Ina

(57) **Abstract**

Auxiliary power supply system for supplying electrical energy from a ground-potential regime (2) to a high-voltage regime (3), wherein a plurality of power transmission units are provided, wherein each of the power transmission units comprises:
- a power converter (5, 6) for converting electrical power into a transmissible power at the ground-potential regime (2);
- an electric power recovering means (8, 10) for generating electric power from the transmissible power at the high-voltage regime; and
- a coupling means (7, 9) for coupling the power converter (5, 6) to the respective electric power recovering means (8, 10) to transmit the transmissible power over an electrical potential barrier to the electric power recovering means (8, 10).

## Description

### Technical field

The present invention relates to the field of electrical power transmission, in particular to power auxiliary systems at high potential in HVDC applications (HVDC = high voltage DC).

### Related art

In high-voltage substations an increasingly broad range of auxiliary electrical devices mounted at high voltage potential need to be powered. For instance, such electrical devices are for switching, controlling and monitoring purposes which serve to further improve the reliability and/or performance of high-voltage power transmission systems.

Therefore, auxiliary power supply equipment is provided which includes a high-voltage portion and a ground potential portion which are connected via a transmission link. The transmission link is for coupling a power source through the ground potential portion and through the high voltage portion of the auxiliary power supply equipment to a load, such as a switching unit, a control unit or a monitoring unit, at high potential.

One approach to supply auxiliary devices at high potential is to tap off the auxiliary power from the high-voltage circuit, for example by means of using transformers. This, however, requires energization of the high-voltage circuit and measures for ensuring the proper operation of the auxiliary device and a waiting time until after energizing the device has settled to such an extent that the auxiliary power can be safely used. However, the energization process is often critical and an auxiliary power supply that is independent of the state of the high-voltage circuit is therefore highly desirable.

Another approach provides a capacitive coupling between a ground-potential installation and a high-potential installation, as disclosed in US 2006/0152109 A1.

One basic problem is to provide insulation between the ground voltage potential and the high voltage potential. In particular for auxiliary devices, such as switching elements, e. g. circuit breakers and disconnectors, it is costly to create a mechanical movement at the ground potential level and transmit this movement to the high-voltage regime using non-conducting rods or other mechanical coupling, thus providing the necessary insulation between the two different potential regimes. This requires a driving mechanism at ground potential and a rod-and-link system at high voltage. However, such a system is mechanically complex, which may result in lower operating lifetimes.

Furthermore, it is known to convert the auxiliary power at ground potential to optical power, transmit the power to the high-potential regime via an optical link or through air and then convert the optical power back to electric power. With this method, only very small amounts of power, typically in the order of fractions of Watts, can be transmitted.

It is an object of the present invention to provide an auxiliary power supply equipment, wherein electrical power can be transmitted from a ground-potential regime to a high-voltage regime independently of a state of energization of the high-voltage regime and wherein said equipment is capable of handling amounts of power sufficient for the operation of auxiliary devices, such as switching elements, controlling and monitoring units as well as series capacitor installations, at the high-voltage regime.

### Summary of the present invention

This object has been achieved by the auxiliary power supply equipment according to claim 1.

Further embodiments are indicated in the depending subclaims.

According to an aspect, an auxiliary power supply system for supplying electrical energy from a ground-potential regime to a high-voltage regime is provided, wherein a plurality of power transmission units are provided, wherein each of the power transmission units comprises:
- a power converter for converting electrical power into a transmissible power at the ground-potential regime;
- an electric power recovering means for generating electric power from the transmissible power at the high-voltage regime; and
- a coupling means for coupling the power converter to the respective electric power recovering means to transmit the transmissible power over an electrical potential barrier to the electric power recovering means.

One idea of the present invention is to transmit power from the ground-potential regime to the high-voltage regime, wherein the transmission means is configured to be electrically insulating. The concept includes that electrical energy available at the ground-potential regime is converted to non-electrical power and at the high-potential regime the non-electrical power is converted back to electrical power at high potential. This allows to overcome the restrictions according to the prior art as a high amount of power can be transferred to supply for the increasing need for additional auxiliary devices at the high-voltage regime.

Furthermore, the combination of different power transfer methods allows for a more optimal power transfer to be realized over a broader power transfer range. In such a hybrid solution, two or more technologies to transfer power to the high-voltage regime allow for each of the power transfer mechanisms to take over the operation of the respective other system when a failure occurs.

Moreover, the electric power recovering means of the plurality of power transmission units may be coupled to an auxiliary power supply unit.

According to an embodiment, a control unit may be configured to control the electric power recovering means of the plurality of power transmission units and to decouple a respective one of the electric power recovering means in case of failure.

Moreover, at least one power converter may include an electric motor for providing mechanical power, wherein the respective electric power recovering means includes a generator for transforming the mechanical energy into electric power at the high-voltage regime; wherein the coupling includes a shaft or a rod arrangement coupling the electric motor and the generator. The mechanical power may be in the form of a rotational or translational motion of the rod or the shaft.

It may be provided that at least one power converter includes an electrically operable pump for providing fluid power, wherein the respective electric power recovering means includes a turbine for transforming the fluid energy into electric power at the high-voltage regime; wherein the coupling means includes a supply tube coupling the pump and the turbine.

Furthermore, at least one power converter may include an exciter for providing magnetic power, wherein the respective electric power recovering means includes a secondary coil and a rectifier for transforming the magnetic energy into electric power at the high-voltage regime; wherein the coupling means includes a primary coil coupling to the secondary coil.

The coupling means may be configured to use a microwave power coupling, optical power coupling and magnetic power coupling.

### Brief description of the drawings

Preferred embodiments of the present invention are described in more detail in conjunction with the accompanying drawings, in which:
- Figure 1: shows a schematic illustration of a general concept of a hybrid power transmission to a high-voltage regime;
- Figure 2: schematically shows a power supply system to transmit mechanical power from a ground-potential regime to the high-voltage regime;
- Figure 3: schematically shows a pump turbine arrangement which uses the pressure and movement of a cooling fluid to transfer non-electrical energy to the high-voltage regime; and
- Figure 4: schematically shows an arrangement for inductive coupling for wireless power transfer within an insulating material.

### Detailed description of embodiments

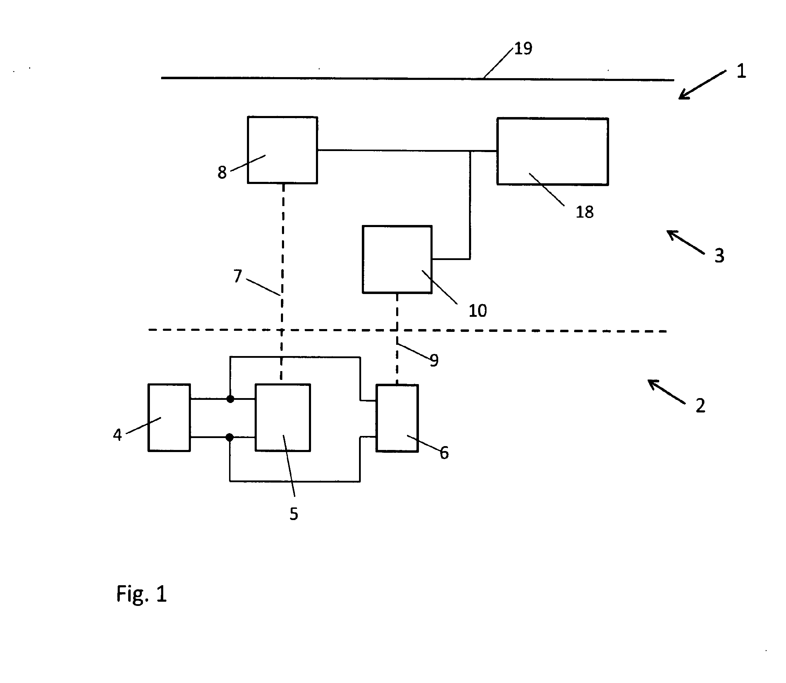

Figure 1 schematically shows auxiliary power supply equipment 1 for transferring electrical energy from a ground-potential regime 2 to a high-voltage regime 3. High voltage in this context is considered to be a voltage typically in the range between 130 kV and 800 kV.

In the ground-potential regime 2 an electric power source 4 is provided which supplies DC or AC electric power to a first power converter 5 and to a second power converter 6. The first power converter 5 is coupled via a first coupling means 7 to a remote first electric power recovering means 8 at the high-voltage regime 3. Correspondingly, the second electric power converter 6 is coupled via a second coupling means 9 to a remote second electric power recovering means 10 at the high-voltage regime 3.

The first and second recovering units 8, 10 are electrically coupled to an auxiliary device 18, so that both can supply electrical energy to the auxiliary device 18. The auxiliary device 18 is further electrically connected to at least one high-voltage line 19, so that it is in contact with high voltage (in relation to ground potential).

When connected to and powered by the first and second power converter 5, 6, respectively, the first and second recovering units 8, 10 receive auxiliary power at the high-voltage regime. Auxiliary power is in this context considered to be a power typically in the range of several to thousands of Watts.

Auxiliary devices as high-voltage installations in high-voltage power transmission systems may comprise devices that are located close to or in galvanic contact with a high-voltage conductor. Examples of such apparatuses are switching elements, series capacitors, sensors for voltage and current as well as monitoring and protective equipment. These auxiliary devices require auxiliary power for their operation.

For supplying the auxiliary device 18 with electric energy, both of the first and the second electric power recovering units 8, 10 are operated to provide electric current to the auxiliary device 18. According to the present invention, both auxiliary power supply units independently provide electric power to the high-voltage regime 3, preferably based on different conversion mechanisms. In the following, concepts of transferring electric energy to the high-voltage regime 3, which can be used for the first and second electric power supply units, are described in more detail.

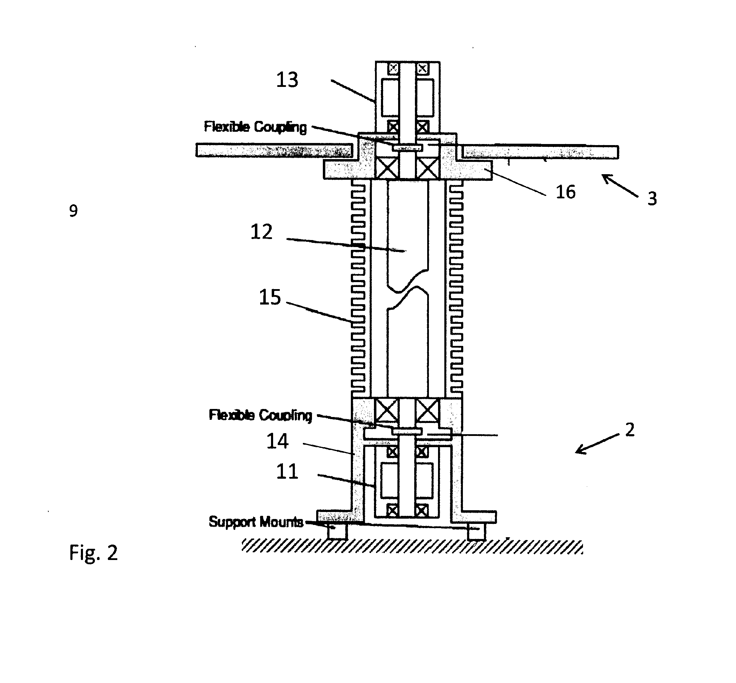

Figure 2 schematically shows an auxiliary power supply unit 10, in which the power is transferred by mechanical rotation energy. The auxiliary power supply unit 10 comprises an electric motor 11 which is coupled directly or via an optional transmission gear to an at least partly non-conductive insulation member 12 that extends between the ground-potential regime 2 and the high-voltage regime 3. The electric motor 11 is housed in a ground-potential housing 14. The insulation member 12 may be entirely made of a non-conductive material or can include a portion between the ground-potential regime and the high-voltage regime which is non-conductive, as long as there is a partial insulation between the regimes 2, 3 which should be sufficient for the voltage potential difference.

At the high-voltage regime 3, the insulation member 12 is coupled directly or via a further optional gear to an electric generator 13, in which mechanical energy transferred by rotation or translation of the insulation member 12 is converted to electric power at the high-voltage level. The electric motor 11 is housed in a ground-potential housing 14 which supports a bushing 15 that is cylindrical and includes the insulation member 12. The bushing 15 extends up to a high-voltage support element 16 which is located at the high-voltage regime 3.

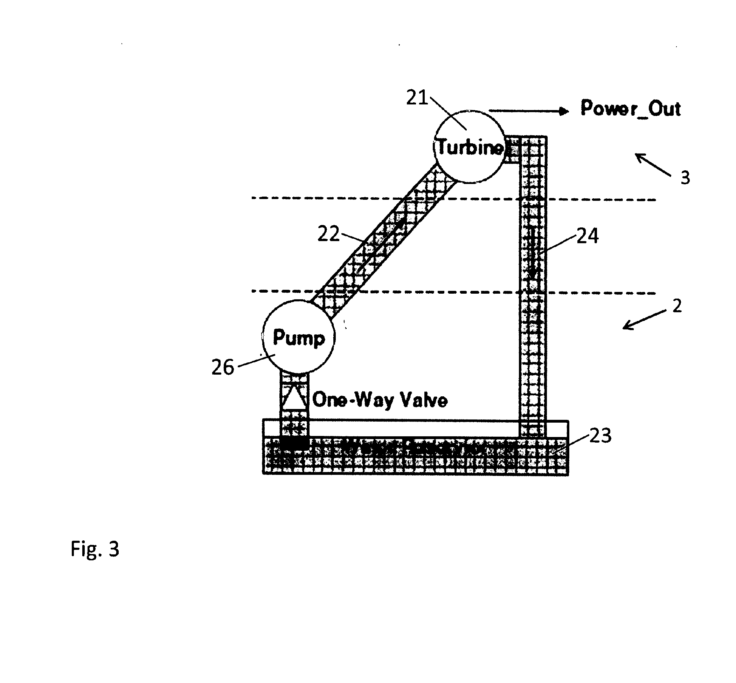

As shown in Figure 3, another embodiment of an electric power supply unit 20 provides the use of a cooling system that is currently in place and should be easily expanded to allow for energy to be drawn at the high-voltage regime 3. As shown, energy can be recovered at the high-voltage regime 3 by a turbine 21 which converts pressure and speed of a cooling liquid provided by a supply tube 22 into electric power. Through a reflux tube 24, a cooling liquid leaving the turbine 21 flows back from the high-voltage regime 3 to the ground-potential regime 2 into a liquid reservoir 23 from which the cooling liquid is pumped by a pump 26 through the supply tube 22 to the turbine 21.

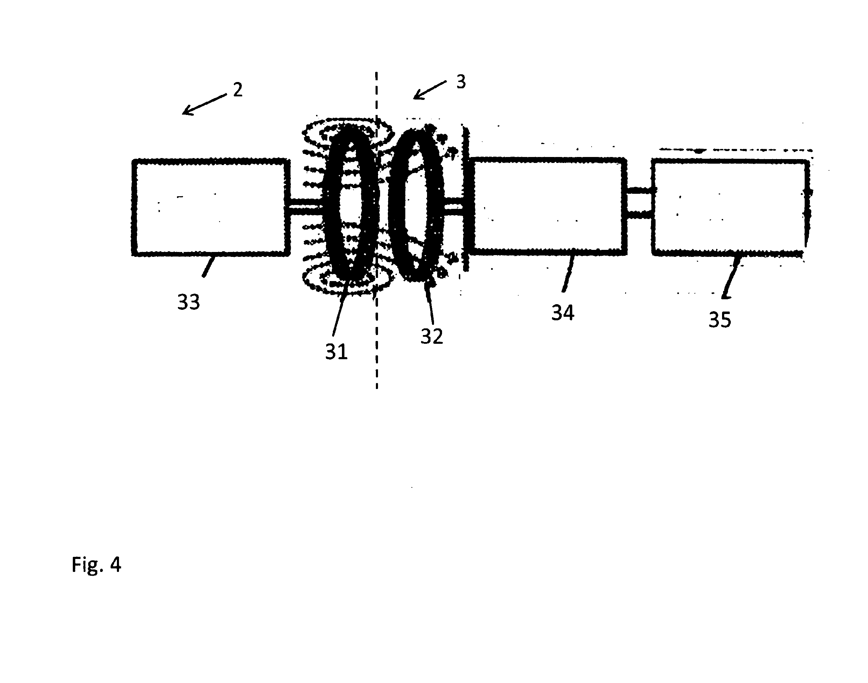

As shown in Figure 4, a third proposed approach utilizes an induction coupling for wireless power transfer within an insulating medium, such as air. The concept consists in the usage of inductive coupling between coils to transfer power over a distance. As shown in Figure 4, there is provided a ground-potential coil 31 at the ground potential 2 and a high-voltage coil 32 at a high-voltage regime 3. The ground-potential coil 31 and the high-voltage coil 32 are coupled via an insulating gap (e.g. Rogowski shields of specifically semi-type materials, concerning magnetic and electrical suspectibility with designed anisotropy).

The ground-potential coil 31 is coupled with an exciter 33 which provides an electric oscillation to supply the ground-potential coil 31 with electric power. The high-voltage coil 32 receives the electric power and, after a rectification in a rectifier 34 and a voltage regulation in a regulator 35, a DC power is available to supply auxiliary devices at high-voltage level..

Further alternatives for transferring energy without galvanic coupling between a ground-potential regime and a high-voltage regime are using microwave power transfer, optical power transfer and magnetic power transfer, which allow for the transmission of energy through air without the provision of elements located between the high-voltage regime 3 and the ground-potential regime 2.

Furthermore, the power transfer concept used in the hybrid solution described above allows for communication and/or control signals to be transmitted in parallel or in combination with the power transfer, i.e. by means of an optical link or using the electrical unit's signals, which might enable condition monitoring to be suitably adjusted to the operating system.

Moreover, integrated and withdraw able disconnectors may be included in the auxiliary power transfer units, which enable the replacement of the auxiliary power transfer unit without interrupting the system being powered.

Furthermore, the auxiliary power transfer units may be provided with an automatic decoupling means to decouple the auxiliary power transfer unit on failure.

### Reference list

- 1: auxiliary power supply equipment
- 2: ground-potential regime
- 3: high-voltage regime
- 4: electric power source
- 5: first power converter
- 6: second power converter
- 7: first coupling means
- 8: first electric power recovering means
- 9: second coupling means
- 10: first electric power recovering means
- 11: electric motor
- 12: insulation member
- 13: electric generator
- 14: ground-potential housing
- 15: bushing
- 16: high-voltage support element
- 17: control unit
- 18: auxiliary power supply unit
- 19: high-voltage line
- 21: turbine
- 22: supply tube
- 23: liquid reservoir
- 24: reflux tube
- 26: pump
- 31: primary ground-potential coil
- 32: secondary high-voltage coil
- 33: exciter
- 34: rectifier
- 35: regulator

## Claims

1. Auxiliary power supply system for supplying electrical energy from a ground-potential regime (2) to a high-voltage regime (3), wherein a plurality of power transmission units are provided, wherein each of the power transmission units comprises:
- a power converter (5, 6) for converting electrical power into a transmissible power at the ground-potential regime (2);
- an electric power recovering means (8, 10) for generating electric power from the transmissible power at the high-voltage regime; and
- a coupling means (7, 9) for coupling the power converter (5, 6) to the respective electric power recovering means (8, 10) to transmit the transmissible power over an electrical potential barrier to the electric power recovering means (8, 10).

2. Auxiliary power supply system according to claim 1, wherein the power transmission units use different power transfer methods.

3. Auxiliary power supply system according to claim 1 or 2, wherein the electric power recovering means (8, 10) of the plurality of power transmission units are coupled to an auxiliary power supply unit (18).

4. Auxiliary power supply system according to one of the claims 1 to 3, wherein a control unit (17) is configured to control the electric power recovering means (8, 10) of the plurality of power transmission units and to decouple a respective one of the electric power recovering means (8, 10) in case of failure.

5. Auxiliary power supply system according to one of the claims 1 to 4, wherein at least one power converter (5, 6) includes an electric motor (11) for providing mechanical power, wherein the respective electric power recovering means (8, 10) includes a generator (13) for transforming the mechanical energy into electric power at the high-voltage regime (3); wherein the coupling means (7, 9) includes an insulation member (12) coupling the electric motor (11) and the generator (13).

6. Auxiliary power supply system according to one of the claims 1 to 5, wherein at least one power converter (5, 6) includes an electrically operable pump (26) for providing fluid power, wherein the respective electric power recovering means (8, 10) includes a turbine (21) for transforming the fluid energy into electric power at the high-voltage regime (3); wherein the coupling means (7, 9) includes a supply tube ("2) coupling the pump (26) and the turbine (21).

7. Auxiliary power supply system according to one of the claims 1 to 6, wherein at least one power converter (5, 6) includes an exciter for providing magnetic power, wherein the respective electric power recovering means includes a secondary coil (32) and a rectifier (34) for transforming the magnetic energy into electric power at the high-voltage regime (3); wherein the coupling means (7, 9) includes a primary coil (31) coupling to the secondary coil (32).

8. Auxiliary power supply system according to one of the claims 1 to 7, wherein the coupling means (7, 9) are configured to use microwave power coupling, optical power coupling and magnetic power coupling.
